# EUROPEAN PATENT APPLICATION

(11) **EP 4 432 647 A1**
(43) Date of publication of application: **18.09.2024**
(21) Application number: 22897385.5
(22) Date of filing: 29.09.2022
(51) Int. Cl.: H04N 7/14

(54) **COMMUNICATION METHOD, TERMINAL AND COMPUTER-READABLE STORAGE MEDIUM**

(30) Priority: 29.11.2021 CN 202111432414
(71) Applicant: ZTE Corporation, Shenzhen, Guangdong 518057 (CN)
(72) Inventor: ZHANG, Yuan, Shenzhen, Guangdong 518057 (CN)
(74) Representative: Bals & Vogel Patentanwälte PartGmbB
(86) International application number: PCT/CN2022/122957
(87) International publication number: WO 2023/093300

(57) **Abstract**

Embodiments of the present application provide a communication method, a terminal, and a computer-readable storage medium. The communication method comprises: a first terminal sends a first request instruction to a second terminal, such that the second terminal adjusts configuration information of a screen recording function according to the first request instruction, and feeds back an adjustment result to the first terminal (S105); and the first terminal establishes a video call or audio call with the second terminal according to the adjustment result (S106).

## Description

### CROSS-REFERENCE TO RELATED APPLICATION

This application is filed on the basis of Chinese patent application No. 202111432414.8 filed November 29, 2021, and claims priority to the Chinese patent application, the entire contents of which are incorporated herein by reference.

### TECHNICAL FIELD

Embodiments of the present disclosure relate to, but not limited to, the technical field of communication, and more particularly, to a communication method, a terminal device, and a computer-readable storage medium.

### BACKGROUND

With the advancement of mobile networks, which have the characteristics of high rate and wide bandwidth, particularly the 5th Generation (5G) networks can support full high-definition video calls. However, capturing or recording the screen during such calls can compromise users' privacy due to the high-definition images, thereby increasing security risks.

### SUMMARY

The following is a summary of the subject matter set forth in this description. This summary is not intended to limit the scope of protection of the claims.

Embodiments of the present disclosure provide a communication method, a terminal device, and a computer-readable storage medium.

In accordance with a first aspect of the present disclosure, an embodiment provides a communication method, applied to a first terminal device in communication connection with a second terminal device, the communication method including: sending a first request instruction to the second terminal device, such that the second terminal device adjusts configuration information of a screen recording function according to the first request instruction, and feeds back an adjustment result to the first terminal device; and establishing a video call or an audio call with the second terminal device according to the adjustment result.

In accordance with a second aspect of the present disclosure, an embodiment provides a communication method, applied to a second terminal device in communication connection with a first terminal device, the communication method including: receiving a first request instruction from the first terminal device; adjusting configuration information of a screen recording function according to the first request instruction; and feeding back an adjustment result to the first terminal device, such that the first terminal device establishes a video call or an audio call with the second terminal device according to the adjustment result.

In accordance with a third aspect of the present disclosure, an embodiment provides a terminal device, including: a memory, a processor, and a computer program stored in the memory and executable by the processor, where the computer program, when executed by the processor, causes the processor to implement the communication method in accordance with the first aspect of the present disclosure or the communication method in accordance with the second aspect of the present disclosure.

In accordance with a fourth aspect of the present disclosure, an embodiment provides a computer-readable storage medium, storing a computer-executable instruction which, when executed by a processor, causes the processor to implement the communication method in accordance with the first aspect of the present disclosure or the communication method in accordance with the second aspect of the present disclosure.

Additional features and advantages of the present disclosure will be set forth in the description which follows, and in part will be obvious from the description, or may be learned by the practice of the present disclosure. The objects and other advantages of the present disclosure can be realized and obtained by the structures particularly pointed out in the description, claims, and drawings.

### BRIEF DESCRIPTION OF DRAWINGS

The drawings are provided for a further understanding of the technical schemes of the present disclosure, and constitute a part of the description. The drawings and the embodiments of the present disclosure are used to illustrate the technical schemes of the present disclosure, and are not intended to limit the technical schemes of the present disclosure.
FIG. 1 is a flowchart of a communication method applied to a first terminal device;
FIG. 2 is another flowchart of a communication method applied to a first terminal device;
FIG. 3(a) is a flowchart of a communication method applied to a first terminal device serving as a called party;
FIG. 3(b) is another flowchart of a communication method applied to a first terminal device serving as a called party,
FIG. 3(c) is another flowchart of a communication method applied to a first terminal device serving as a called party,
FIG. 3(d) is another flowchart of a communication method applied to a first terminal device serving as a called party,
FIG. 3(e) is another flowchart of a communication method applied to a first terminal device serving as a called party,
FIG. 3(f) is another flowchart of a communication method applied to a first terminal device serving as a called party,
FIG. 3(g) is another flowchart of a communication method applied to a first terminal device serving as a called party,
FIG. 4(a) is a flowchart of a communication method applied to a first terminal device serving as a calling party;
FIG. 4(b) is another flowchart of a communication method applied to a first terminal device serving as a calling party,
FIG. 4(c) is another flowchart of a communication method applied to a first terminal device serving as a calling party,
FIG. 4(d) is another flowchart of a communication method applied to a first terminal device serving as a calling party,
FIG. 4(e) is another flowchart of a communication method applied to a first terminal device serving as a calling party,
FIG. 4(f) is another flowchart of a communication method applied to a first terminal device serving as a calling party,
FIG. 4(g) is another flowchart of a communication method applied to a first terminal device serving as a calling party,
FIG. 5 is a flowchart of a communication method applied to a second terminal device;
FIG. 6 is a flowchart of S405 in FIG. 5;
FIG. 7 is a flowchart of a communication method applied to a second terminal device serving as a calling party;
FIG. 8 is a flowchart of a communication method applied to a second terminal device serving as a called party;
FIG. 9 is a block diagram of modules of a terminal device; and
FIG. 10 is a structural diagram of a terminal device.

### DETAILED DESCRIPTION

To make the objects, technical schemes, and advantages of the present disclosure clear, the present disclosure is described in further detail in conjunction with accompanying drawings and examples. It should be understood that the embodiments described herein are merely used for illustrating the present disclosure, and are not intended to limit the present disclosure.

It is to be noted, although functional modules have been divided in the schematic diagrams of apparatuses and logical orders have been shown in the flowcharts, in some cases, the modules may be divided in a different manner, or the steps shown or described may be executed in an order different from the orders as shown in the flowcharts. The terms such as "first", "second" and the like in the description, the claims, and the accompanying drawings are used to distinguish similar objects, and are not necessarily used to describe a specific sequence or a precedence order.

The present disclosure provides a communication method, a terminal device, and a computer-readable storage medium. The communication method is applied to a first terminal device and a second terminal device that are in communication connection with each other. The first terminal device sends a first request instruction to the second terminal device, such that the second terminal device adjusts configuration information of a screen recording function according to the first request instruction, and feeds back an adjustment result to the first terminal device; and establishes a video call or an audio call with the second terminal device according to the adjustment result. The second terminal device receives the first request instruction from the first terminal device, adjusts the configuration information of the screen recording function according to the first request instruction, feeds back the adjustment result to the first terminal device, such that the first terminal device establishes a video call or an audio call with the second terminal device according to the adjustment result. In this way, there is no need to encrypt video content, and the video call processing efficiency is improved. Because there is no need to add a video encryption server in the call network, the costs are reduced. In addition, the screen recording function at the terminal device is limited through configuration, to improve the security of the video call.

The embodiments of the present disclosure will be further described in detail below in conjunction with the accompanying drawings.

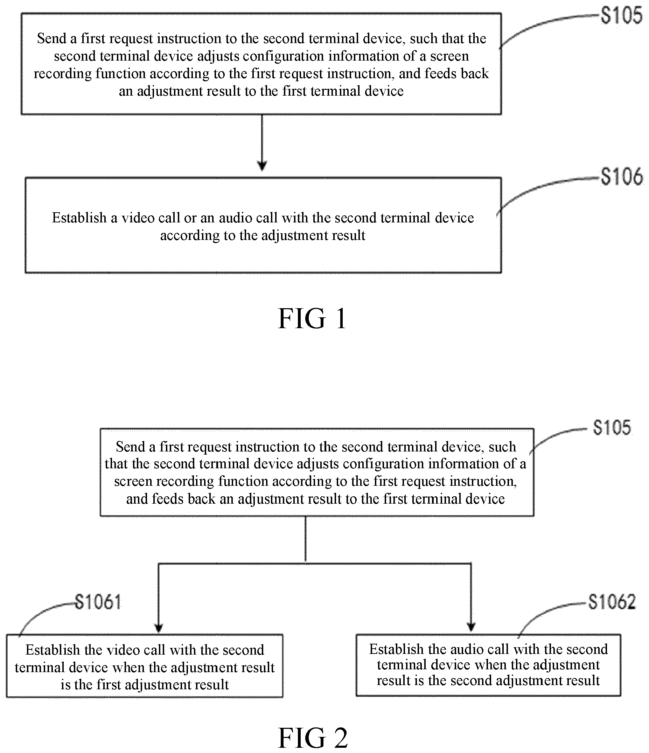

FIG. 1 is a flowchart of a communication method applied to a first terminal device. The communication method is applied to the first terminal device, and the first terminal device is in communication connection with a second terminal device.

As shown in FIG. 1, the communication method includes, but not limited to, the following steps.

In a step of S105, a first request instruction is sent to the second terminal device, such that the second terminal device adjusts configuration information of a screen recording function according to the first request instruction, and feeds back an adjustment result to the first terminal device.

In a step of S106, a video call or an audio call is established with the second terminal device according to the adjustment result.

In this embodiment, when the first terminal device intends to make a video call with the second terminal device, the first terminal device sends a first request instruction to the second terminal device, where the first request instruction is used for requesting the second terminal device to adjust the configuration information of the screen recording function to disable the screen recording function; and the first terminal device receives an adjustment result fed back by the second terminal device, and establishes a video call or an audio call with the second terminal device according to the adjustment result.

FIG. 2 is a flowchart of a communication method applied to a first terminal device. In some embodiments, for S106, the adjustment result includes a first adjustment result and a second adjustment result. The first adjustment result indicates that the screen recording function of the second terminal device has been adjusted to a disabled state, i.e., the second terminal device accepts to disable the screen recording function during the video call. The second adjustment result indicates that the screen recording function of the second terminal device has been adjusted to an enabled state, i.e., the second terminal device rejects to disable the screen recording function during the video call.

In this case, 5106 includes the following steps.

In a step of S1061, the first terminal device sends video stream data and audio stream data to the second terminal device and establish the video call with the second terminal device when the adjustment result is the first adjustment result.

In a step of S1062, the first terminal device sends only audio stream data to the second terminal device and establishes the audio call with the second terminal device when the adjustment result is the second adjustment result.

In the communication method, the security of the video call is improved by disabling the screen recording function of the peer end in the video call.

It should be noted that the screen recording function includes a screen capture function of capturing an image of the screen and a screen recording function of recording a desktop streaming video of the screen.

The communication method is applied to a call between terminal devices. The call includes, but not limited to, a Voice over New Radio (VoNR) call, a Voice over LTE (VoLTE) call, a Voice over WiFi (VoWiFi) call, and other Internet Protocol Multimedia Subsystem (IMS) types of calls.

When a video call needs to be established between the first terminal device and the second terminal device, a call request needs to be sent between the first terminal device and the second terminal device. The first request instruction is sent by the first terminal device to the second terminal device through a data channel. Therefore, after the call request is sent, an IMS data channel needs to be established between the first terminal device and the second terminal device to transmit the first request instruction.

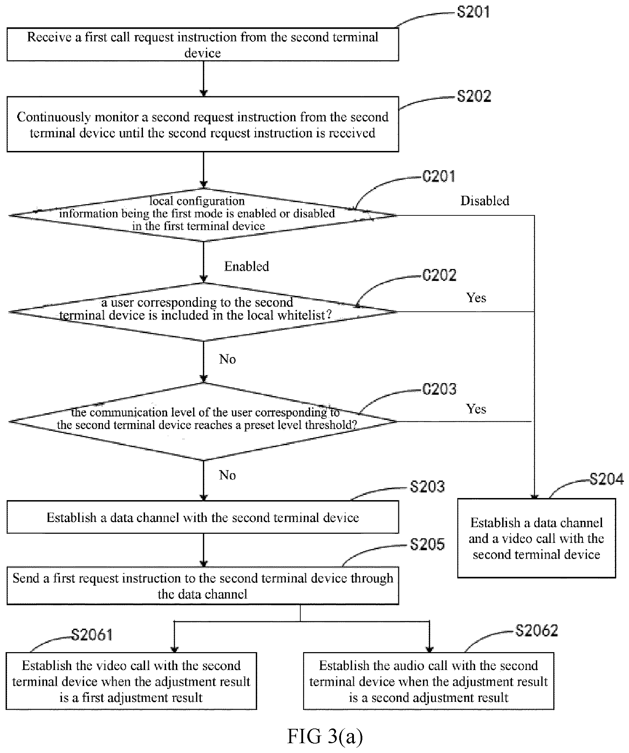

FIG. 3(a) is a flowchart of a communication method applied to a first terminal device serving as a called party. When the first terminal device is the called party, the method includes, but not limited to, the following steps before sending a first request instruction to a second terminal device.

In a step of S201, a first call request instruction from the second terminal device is received.

In a step of S202, a second request instruction from the second terminal device is continuously monitored until the second request instruction is received, where the second request instruction is a data channel establishment request instruction for requesting to establish an IMS data channel between the first terminal device and the second terminal device.

In a step of S203, the IMS data channel is established with the second terminal device.

It should be noted that in some embodiments, the data channel establishment request instruction is a dcmap field in a Session Description Protocol (SDP) message in Session Initiation Protocol (SIP) signaling. According to the 3GPP TS 26.114 specification, the dcmap field is related to data channel establishment. The dcmap field is parsed to determine whether to establish a data channel. For example, an SDP offer includes information: a=dcmap:0 subprotocol="http" .

In some embodiments, the IMS data channel is set up in a 5G call network to transmit richer information, so as to realize multi-dimensional interactive experience and provide a brand-new communication scenario.

The IMS data channel may be an independently created data channel. Generally, it is a data channel with a Stream ID less than 1000, which is used for allowing a terminal device to acquire a data channel application from the network side. According to the 3GPP TS 26.114 specification, the data channel application generally includes HyperText Markup Language (HTML), JavaScript scripts, Cascading Style Sheets (CSS), and so on. Alternatively, the IMS data channel may be a non-independently created data channel for transmitting data information required by a data channel application.

According to the 3GPP TS 26.114 specification, an IMS data channel may be directly established between the first terminal device and the second terminal device. Alternatively, the first terminal device establishes a data sub-channel with a data channel server, the second terminal device establishes another data sub-channel with the data channel server, and the two data sub-channels together form an IMS data channel between the first terminal device and the second terminal device.

The first call request instruction is used for requesting to establish a video call between the first terminal device and the second terminal device. In some embodiments, when the first terminal device is the called party, the first call request instruction is sent from the second terminal device to the first terminal device, and is a request instruction from the second terminal device for requesting to establish a video call with the first terminal device.

The first terminal device receives the first call request instruction from the second terminal device. The first terminal device continuously monitors a data channel establishment request instruction from the second terminal device. When the first terminal device receives the data channel establishment request instruction, the first terminal device establishes a data channel with the second terminal device.

In addition, in some embodiments, before sending the first request instruction to the second terminal device, and after the first terminal device serving as the called party continuously monitors the data channel establishment request instruction from the second terminal device until the data channel establishment request instruction is received, the following steps are executed. In a step of C201, local configuration information is queried, to determine whether the local configuration information indicates that the first mode is enabled in the first terminal device or the first mode is disabled in the first terminal device.

When the local configuration information indicates that the first mode is disabled in the first terminal device, a step S204 is executed to directly establish a video call with the second terminal device. Of course, before the video call is established with the second terminal device, an IMS data channel may be established to facilitate data transmission.

It should be noted that the local configuration information may be set through a local switch of the terminal device. The local switch of the terminal device may be set by the local user terminal device. For example, a switch "Restrict Screen Recording and Screen Capture at the peer end" is displayed in a setting menu or call interface for the user to set.

When the local switch of the first terminal device is in an off state, the local configuration information indicates that the first mode is disabled in the first terminal device, and there is no need to send the first request instruction to the second terminal device. In other words, when the first mode is disabled in the first terminal device, the first terminal device does not require the second terminal device to disable the screen recording function during the video call. When the local switch of the first terminal device is in an on state, the local configuration information indicates that the first mode is enabled in the first terminal device, i.e., the first terminal device requires the second terminal device to disable the screen recording function during the video call, and the first terminal device sends the first request instruction to the second terminal device. When the first mode is enabled in the first terminal device, the screen recording function of the second terminal device needs to be disabled during the video call between the first terminal device and the second terminal device.

In addition, in some embodiments, before sending the first request instruction to the second terminal device, and after the first terminal device serving as the called party continuously monitors the data channel establishment request instruction from the second terminal device until the data channel establishment request instruction is received, the following steps are executed. In a step of C202, a local whitelist which is preset is queried, to determine whether a user corresponding to the second terminal device is included in the local whitelist, where the local whitelist is used for recording a user who is allowed to perform a screen recording operation during the video call.

It should be noted that the local whitelist may be set by the local user terminal device and displayed on the first terminal device. When the user corresponding to the second terminal device is determined as a trusted user by the local user terminal device, the local user terminal device may add the trusted user to the local whitelist.

When the user corresponding to the second terminal device is included in the local whitelist, S204 is executed to directly establish the video call with the second terminal device. Of course, before the video call is established with the second terminal device, an IMS data channel may be established to facilitate data transmission.

In addition, in some embodiments, before sending the first request instruction to the second terminal device, and after the first terminal device serving as the called party continuously monitors the data channel establishment request instruction from the second terminal device until the data channel establishment request instruction is received, the following steps are executed. In a step of C203, a communication level of a user corresponding to the second terminal device is queried to determine whether the communication level of the user corresponding to the second terminal device reaches a preset level threshold.

It should be noted that the communication level is a self-defined level of a user participating in the video call.

The communication level of the user corresponding to the second terminal device may be entered and recorded by the local user terminal device and stored locally in the first terminal device, and the communication level of the user corresponding to the second terminal device may be acquired by querying a level list stored locally in the first terminal device. Alternatively, the first terminal device may send a request instruction to the second terminal device for querying the communication level of the user of the second terminal device, and the first terminal device may acquire information fed back by the second terminal device according to the request instruction, to acquire the communication level of the user corresponding to the second terminal device.

When the communication level of the user corresponding to the second terminal device reaches the preset level threshold, S204 is executed to directly establish the video call with the second terminal device. Of course, before the video call is established with the second terminal device, an IMS data channel may be established to facilitate data transmission.

It should be noted that the first terminal device may execute one or more of the determining steps C201, C202, and C203 according to actual requirements.

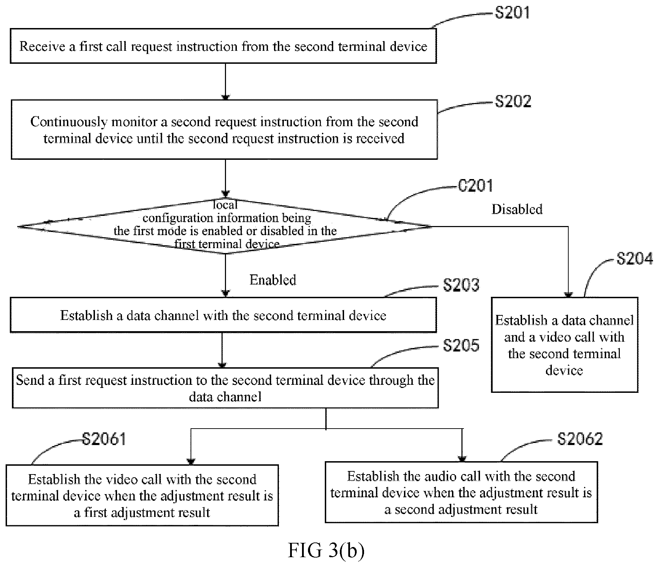

For example, referring to FIG. 3(b), only the local switch corresponding to the local configuration information is set in the first terminal device, and neither a whitelist nor a communication level is set in the first terminal device. In this case, only C201 is executed. When the local configuration information indicates that the first mode is disabled in the first terminal device, S204 is executed. When the local configuration information indicates that the first mode is enabled in the first terminal device, S203 is executed to only establish an IMS data channel with the second terminal device.

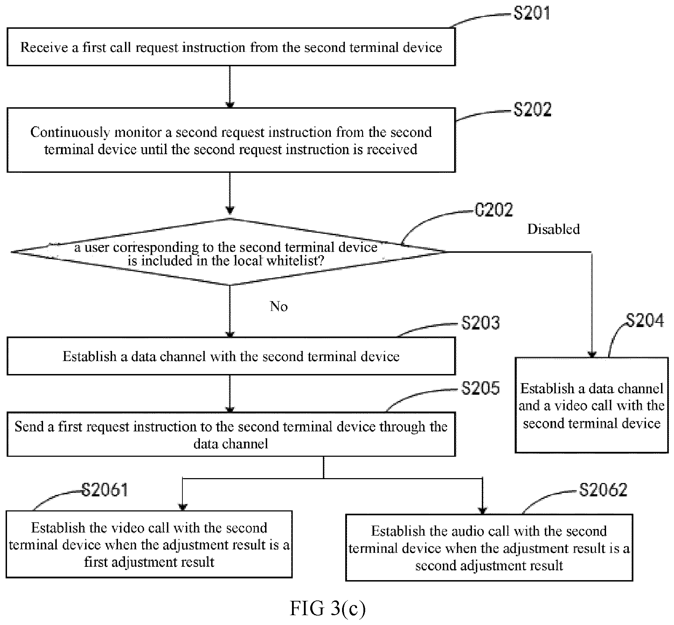

For another example, referring to FIG. 3(c), the first mode is enabled in the first terminal device by default, and no communication level is set in the first terminal device. In this case, only C202 is executed. When the user corresponding to the second terminal device is included in the local whitelist, S204 is executed. When the user corresponding to the second terminal device is not included in the local whitelist, S203 is executed.

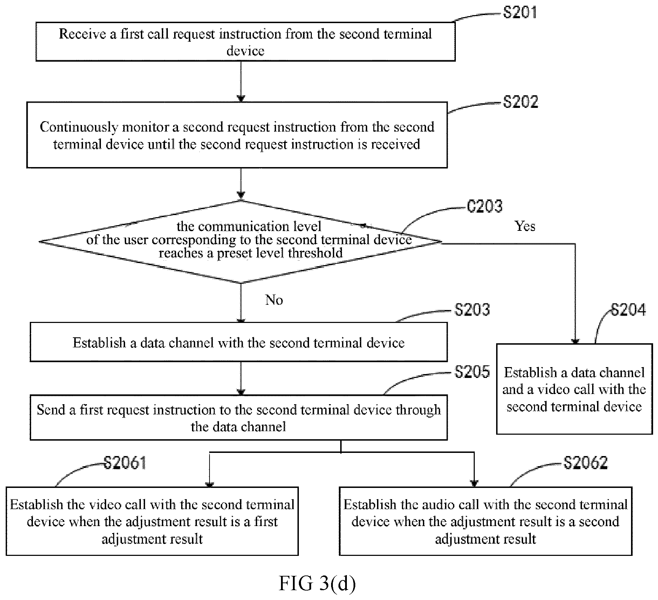

For another example, referring to FIG. 3(d), the first mode is enabled in the first terminal device by default, and no whitelist is set in the first terminal device. In this case, only C203 is executed. When the communication level of the user corresponding to the second terminal device reaches the preset level threshold, S204 is executed. When the communication level of the user corresponding to the second terminal device does not reach the preset level threshold, S203 is executed.

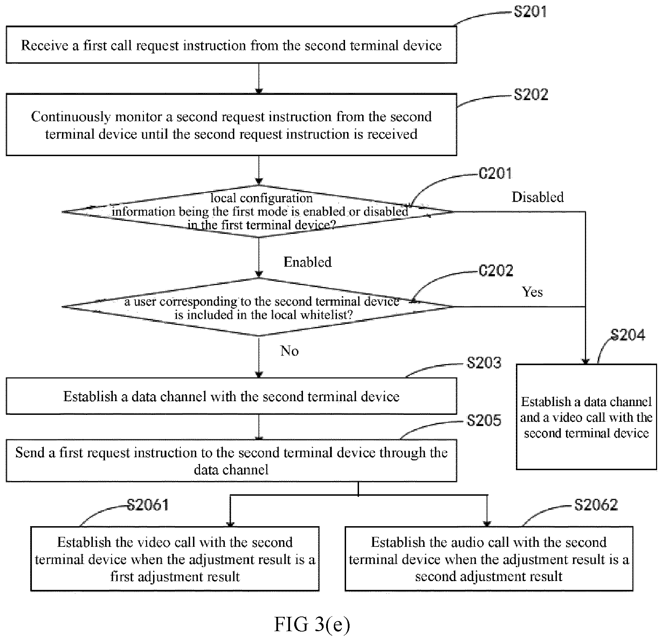

For another example, referring to FIG. 3(e), the local switch and the whitelist are set in the first terminal device, and no communication level is set in the first terminal device. In this case, only C201 and C202 are executed. It should be noted that a priority of C201 is higher than that of C202. When the local configuration information indicates that the first mode is disabled in the first terminal device, S204 is executed. When the user corresponding to the second terminal device is included in the local whitelist, S204 is executed. When the local configuration information indicates that the first mode is enabled in the first terminal device, and the user corresponding to the second terminal device is not included in the local whitelist, S203 is executed.

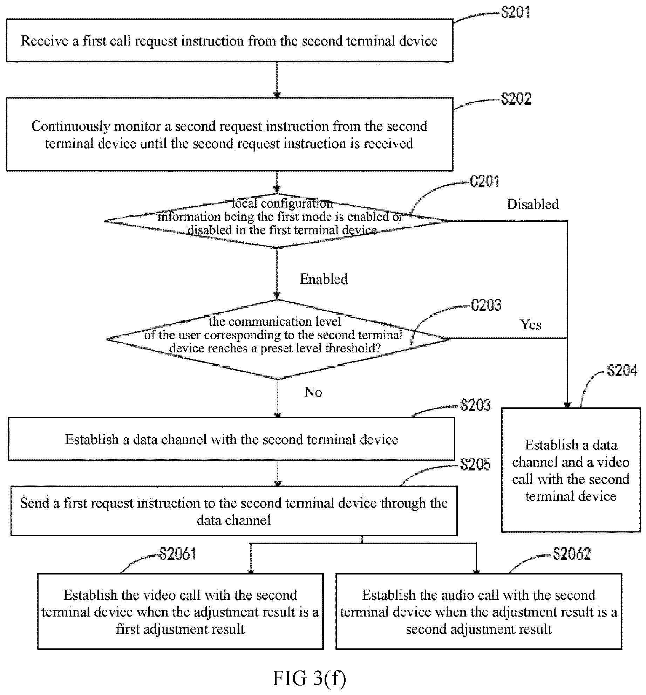

For another example, referring to FIG. 3(f), the local switch and the communication level are set in the first terminal device, and no whitelist is set in the first terminal device. In this case, only C201 and C203 are executed. It should be noted that a priority of C201 is higher than that of C203. When the local configuration information indicates that the first mode is disabled in the first terminal device, S204 is executed. When the communication level of the user corresponding to the second terminal device reaches the preset level threshold, S204 is executed. When the local configuration information indicates that the first mode is enabled in the first terminal device, and the communication level of the user corresponding to the second terminal device does not reach the preset level threshold, S203 is executed.

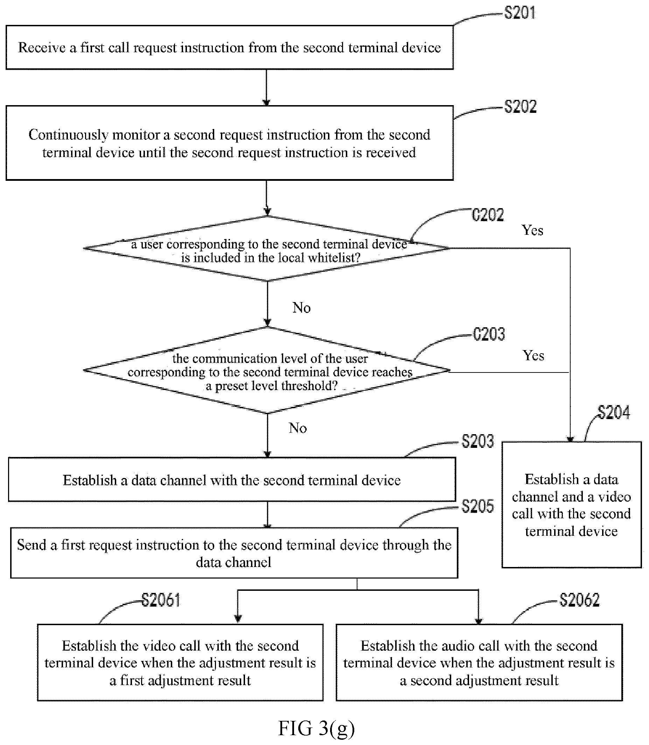

For another example, referring to FIG. 3(g), the first mode is enabled in the first terminal device by default, and the whitelist and the communication level are set in the first terminal device. In this case, only C202 and C203 are executed. It should be noted that a priority of C202 is the same as that of C203, i.e., C202 may be executed before C203, or C203 may be executed before C202. When the communication level of the user corresponding to the second terminal device reaches the preset level threshold or the user corresponding to the second terminal device is included in the local whitelist, S204 is executed. When the communication level of the user corresponding to the second terminal device does not reach the preset level threshold and the user corresponding to the second terminal device is not included in the local whitelist, S203 is executed.

For another example, referring to FIG. 3(a), the local switch, the whitelist, and the communication level are set in the first terminal device. In this case, C201, C202, and C203 are executed. It should be noted that a priority of C201 is higher than those of C202 and C203, and the priority of C202 is the same as that of C203. In this case, C201 needs to be executed first. When the local configuration information indicates that the first mode is disabled in the first terminal device, S204 is executed. When the local configuration information indicates that the first mode is enabled in the first terminal device, C202 and C203 are executed. C202 may be executed before C203, or C203 may be executed before C202. When the communication level of the user corresponding to the second terminal device reaches the preset level threshold or the user corresponding to the second terminal device is included in the local whitelist, S204 is executed. When the communication level of the user corresponding to the second terminal device does not reach the preset level threshold and the user corresponding to the second terminal device is not included in the local whitelist, S203 is executed.

In addition, after the data channel is established with the second terminal device in S203, the following steps are executed.

In a step of S205, a first request instruction is sent through the data channel, such that the second terminal device adjusts configuration information of a screen recording function according to the first request instruction, and feeds back an adjustment result to the first terminal device.

A video call or an audio call is established with the second terminal device according to the adjustment result. In some embodiments, in a step of S2061, the video call is established with the second terminal device when the adjustment result is a first adjustment result. In a step of S2062, the audio call is established with the second terminal device when the adjustment result is a second adjustment result.

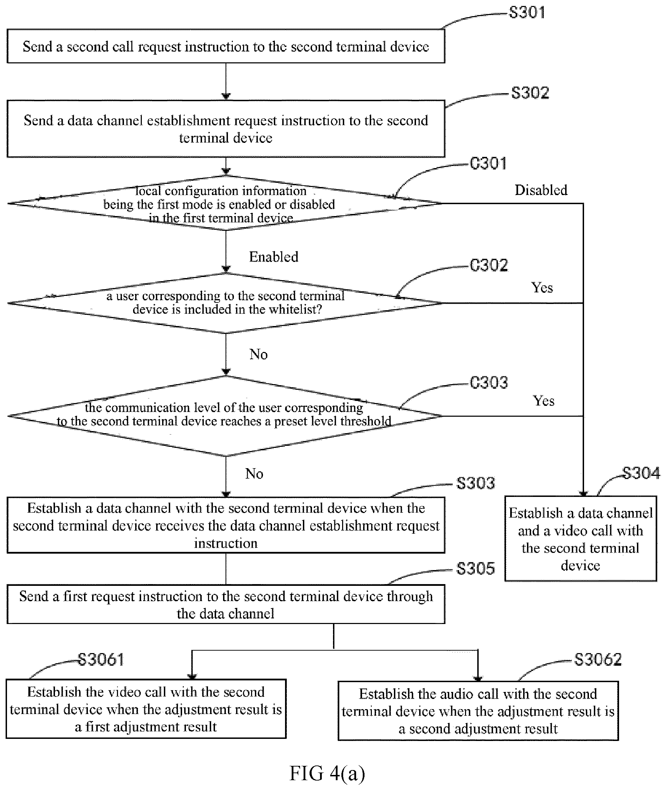

FIG. 4(a) is a flowchart of a communication method applied to a first terminal device serving as a calling party. When the first terminal device is the calling party, the method includes, but not limited to, the following steps before sending a first request instruction to a second terminal device.

In a step of S301, a second call request instruction is sent to the second terminal device.

In a step of S302, a data channel establishment request instruction is sent to the second terminal device.

In a step of S303, the first terminal device establishes a data channel with the second terminal device when the second terminal device receives the data channel establishment request instruction sent by the first terminal device.

Similarly, the second call request instruction is used for requesting to establish a video call between the first terminal device and the second terminal device. When the first terminal device is the calling party, the second call request instruction is sent from the first terminal device to the second terminal device for requesting to establish the video call with the second terminal device. The second call request instruction and the first call request instruction are of the same type.

When the first terminal device is the calling party, the first terminal device sends the second call request instruction to the second terminal device, and at the same time, the first terminal device sends the data channel establishment request instruction to the second terminal device. After receiving the second call request instruction, the second terminal device continuously monitors the data channel establishment request instruction. The first terminal device establishes the data channel with the second terminal device when the second terminal device receives the data channel establishment request instruction sent by the first terminal device.

In addition, in some embodiments, before sending the first request instruction to the second terminal device, and after the first terminal device serving as the calling party sends the data channel establishment request instruction to the second terminal device, the following steps are executed. In a step of C301, local configuration information is queried, to determine whether the local configuration information indicates that the first mode is enabled in the first terminal device or the first mode is disabled in the first terminal device.

When the local configuration information indicates that the first mode is disabled in the first terminal device, a step S304 is executed to directly establish the video call with the second terminal device. Of course, before the video call is established with the second terminal device, an IMS data channel may be established to facilitate data transmission.

In addition, in some embodiments, before sending the first request instruction to the second terminal device, and after the first terminal device serving as the calling party sends the data channel establishment request instruction to the second terminal device, the following steps are executed. In a step of C302, a local whitelist which is preset is queried, to determine whether a user corresponding to the second terminal device is included in the whitelist, where the local whitelist is used for recording a user who is allowed to perform a screen recording operation during the video call.

When the user corresponding to the second terminal device is included in the local whitelist, S304 is executed to directly establish the video call with the second terminal device. Of course, before the video call is established with the second terminal device, an IMS data channel may be established to facilitate data transmission.

It should be noted that the step of querying the preset local whitelist may be introduced on the basis of querying the local configuration information. In this case, the step of querying the preset local whitelist is executed when the local configuration information indicates that the first mode is enabled in the first terminal device.

In addition, in some embodiments, before sending the first request instruction to the second terminal device, and after the first terminal device serving as the calling party sends the data channel establishment request instruction to the second terminal device, the following steps are executed. In a step of C303, a communication level of a user corresponding to the second terminal device is queried to determine whether the communication level of the user corresponding to the second terminal device reaches a preset level threshold.

When the communication level of the user corresponding to the second terminal device reaches the preset level threshold, S304 is executed to directly establish the video call with the second terminal device. Of course, before the video call is established with the second terminal device, an IMS data channel may be established to facilitate data transmission.

It should be noted that the first terminal device may execute one or more of the determining steps C301, C302, and C303 according to actual requirements.

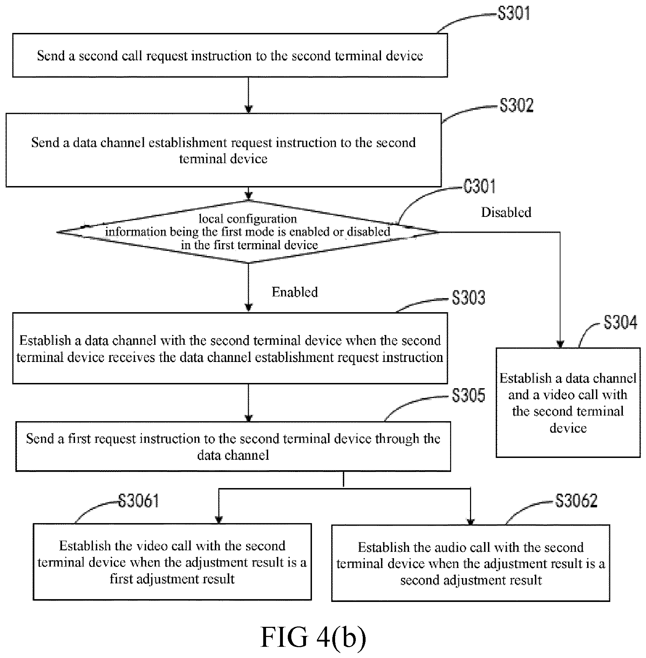

For example, referring to FIG. 4(b), only the local switch corresponding to the local configuration information is set in the first terminal device, and neither a whitelist nor a communication level is set in the first terminal device. In this case, only C301 is executed. When the local configuration information indicates that the first mode is disabled in the first terminal device, S304 is executed. When the local configuration information indicates that the first mode is enabled in the first terminal device, S303 is executed to only establish an IMS data channel with the second terminal device.

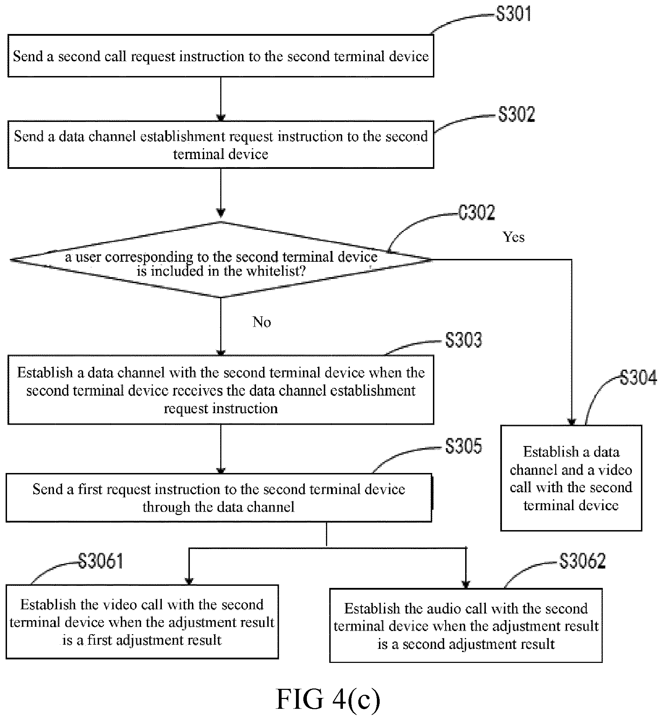

For another example, referring to FIG. 4(c), the first mode is enabled in the first terminal device by default, and no communication level is set in the first terminal device. In this case, only C302 is executed. When the user corresponding to the second terminal device is included in the local whitelist, S304 is executed. When the user corresponding to the second terminal device is not included in the local whitelist, S303 is executed.

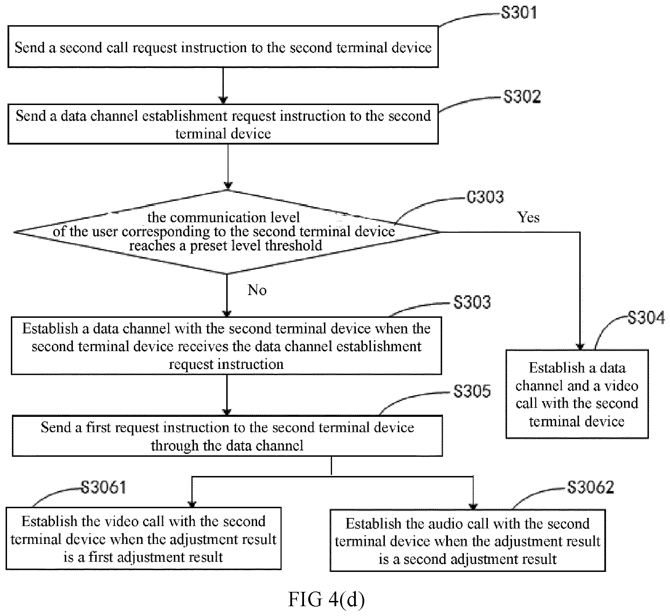

For another example, referring to FIG. 4(d), the first mode is enabled in the first terminal device by default, and no whitelist is set in the first terminal device. In this case, only C303 is executed. When the communication level of the user corresponding to the second terminal device reaches the preset level threshold, S304 is executed. When the communication level of the user corresponding to the second terminal device does not reach the preset level threshold, S303 is executed.

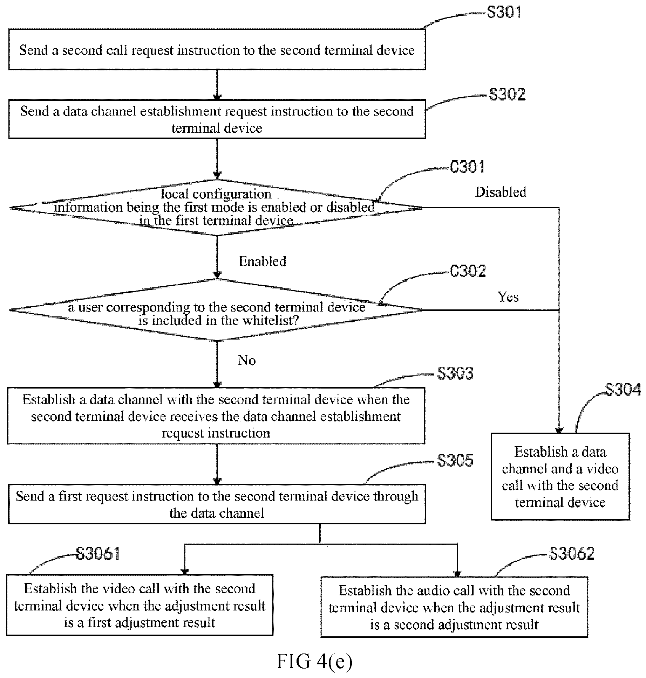

For another example, referring to FIG. 4(e), the local switch and the whitelist are set in the first terminal device, and no communication level is set in the first terminal device. In this case, only C301 and C302 are executed. It should be noted that a priority of C301 is higher than that of C302. When the local configuration information indicates that the first mode is disabled in the first terminal device, S304 is executed. When the user corresponding to the second terminal device is included in the local whitelist, S304 is executed. When the local configuration information indicates that the first mode is enabled in the first terminal device, and the user corresponding to the second terminal device is not included in the local whitelist, S303 is executed.

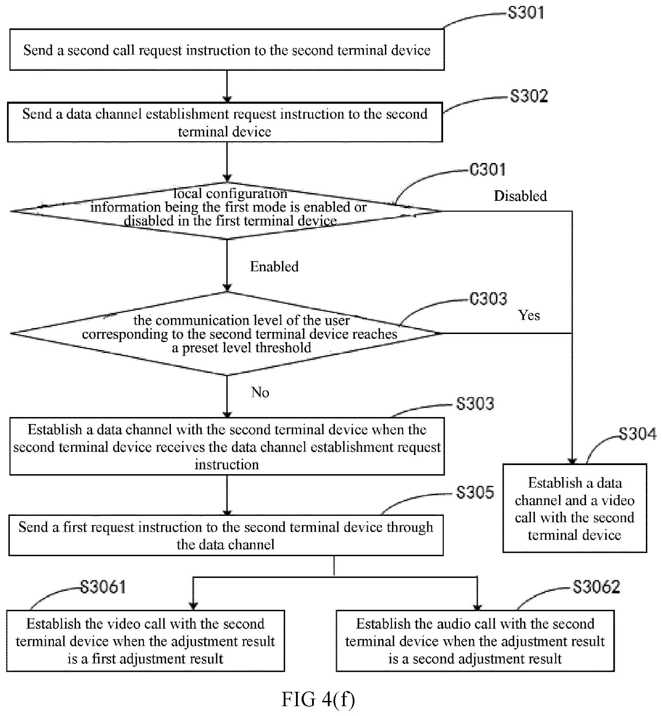

For another example, referring to FIG. 4(f), the local switch and the communication level are set in the first terminal device, and no whitelist is set in the first terminal device. In this case, only C301 and C303 are executed. It should be noted that a priority of C301 is higher than that of C303. When the local configuration information indicates that the first mode is disabled in the first terminal device, S304 is executed. When the communication level of the user corresponding to the second terminal device reaches the preset level threshold, S304 is executed. When the local configuration information indicates that the first mode is enabled in the first terminal device, and the communication level of the user corresponding to the second terminal device does not reach the preset level threshold, S303 is executed.

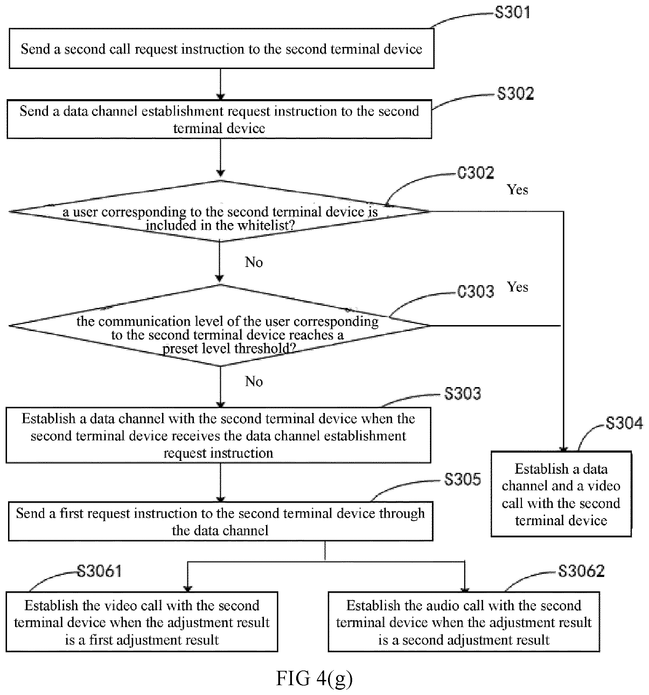

For another example, referring to FIG. 4(g), the first mode is enabled in the first terminal device by default, and the whitelist and the communication level are set in the first terminal device. In this case, only C302 and C303 are executed. It should be noted that a priority of C302 is the same as that of C303, i.e., C302 may be executed before C303, or C303 may be executed before C302. When the communication level of the user corresponding to the second terminal device reaches the preset level threshold or the user corresponding to the second terminal device is included in the local whitelist, S304 is executed. When the communication level of the user corresponding to the second terminal device does not reach the preset level threshold and the user corresponding to the second terminal device is not included in the local whitelist, S303 is executed.

For another example, referring to FIG. 4(a), the local switch, the whitelist, and the communication level are set in the first terminal device. In this case, C301, C302, and C303 are executed. It should be noted that a priority of C301 is higher than those of C302 and C303, and the priority of C302 is the same as that of C303. In this case, C301 needs to be executed first. When the local configuration information indicates that the first mode is disabled in the first terminal device, S304 is executed. When the local configuration information indicates that the first mode is enabled in the first terminal device, C302 and C303 are executed. C302 may be executed before C303, or C303 may be executed before C302. When the communication level of the user corresponding to the second terminal device reaches the preset level threshold or the user corresponding to the second terminal device is included in the local whitelist, S304 is executed. When the communication level of the user corresponding to the second terminal device does not reach the preset level threshold and the user corresponding to the second terminal device is not included in the local whitelist, S303 is executed.

After the first terminal device establishes a data channel with the second terminal device when the second terminal device receives the data channel establishment request instruction sent by the first terminal device in S303, the following steps are executed.

In a step of S305, a first request instruction is sent through the data channel, such that the second terminal device adjusts configuration information of a screen recording function according to the first request instruction, and feeds back an adjustment result to the first terminal device.

A video call or an audio call is established with the second terminal device according to the adjustment result. In some embodiments, in a step of S3061, the video call is established with the second terminal device when the adjustment result is a first adjustment result. In a step of S3062, the audio call is established with the second terminal device when the adjustment result is a second adjustment result.

In addition, after the video call or the audio call is ended, the data channel is released and disconnected.

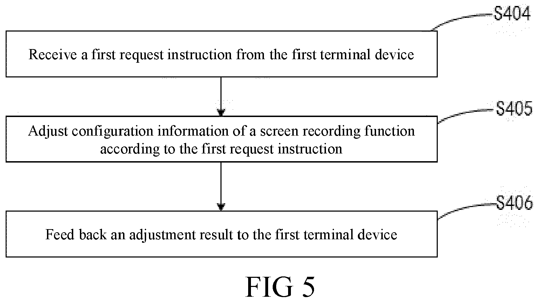

FIG. 5 is a flowchart of a communication method applied to a second terminal device; The communication method is applied to the second terminal device, and the second terminal device is in communication connection with the first terminal device.

As shown in FIG. 5, the communication method includes, but not limited to, the following steps.

In a step of S404, a first request instruction from the first terminal device is received.

In a step of S405, configuration information of a screen recording function is adjusted according to the first request instruction.

In a step of S406, an adjustment result is fed back to the first terminal device, such that the first terminal device establishes a video call or an audio call with the second terminal device according to the adjustment result.

In this embodiment, the first terminal device sends the first request instruction to the second terminal device; the second terminal device receives the first request instruction, adjusts the configuration information of the screen recording function according to the first request instruction, and feeds back the adjustment result to the first terminal device; and the first terminal device receives the adjustment result and establishes the video call or the audio call with the second terminal device according to the adjustment result.

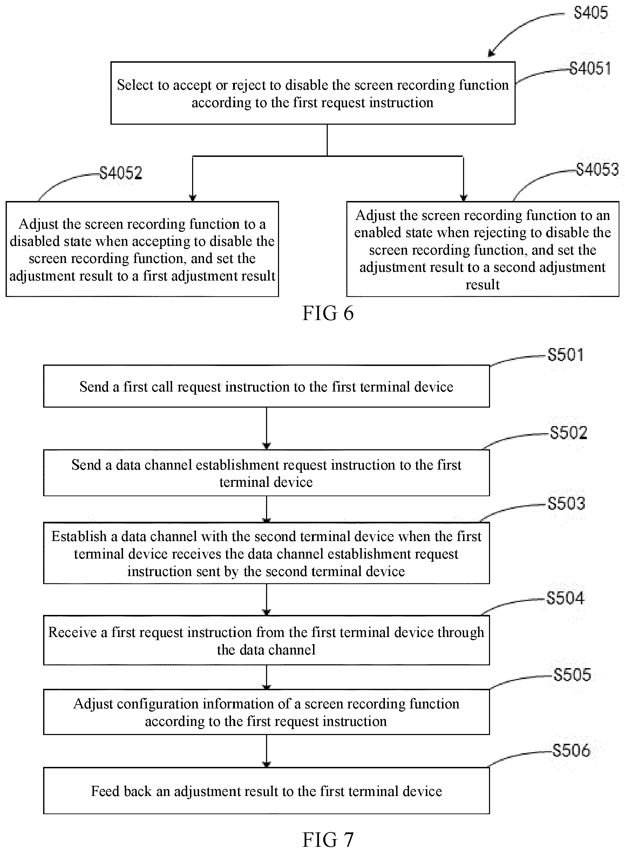

Referring to FIG. 6, in some embodiments, the first request instruction is used for requesting the second terminal device to disable the screen recording function during the video call. When receiving the first request instruction, the second terminal device may select to accept or reject to disable the screen recording function. In this case, S405 includes the following steps.

In a step of S4051, the second terminal device selects to accept or reject to disable the screen recording function according to the first request instruction.

In a step of S4052, the screen recording function is adjusted to a disabled state when accepting to disable the screen recording function, and the adjustment result is set to a first adjustment result, where the first adjustment result indicates that the screen recording function has been adjusted to the disabled state.

In a step of S4053, the screen recording function is adjusted to an enabled state when rejecting to disable the screen recording function, and the adjustment result is set to a second adjustment result, where the second adjustment result indicates that the screen recording function has been adjusted to the enabled state.

It should be noted that when receiving the first request instruction, the second terminal device may display a selection switch on a display interface for the user of the second terminal device to select to accept or reject to disable the screen recording function, and the user of the second terminal device selects whether to disable the screen recording function during the video call through the selection switch. Alternatively, the second terminal device may automatically select to accept or reject to disable the screen recording function according to internal settings.

In addition, when the second terminal device accepts to disable the screen recording function, no additional adjustment is required if the screen recording function is already in the disabled state, and the screen recording function is adjusted from the enabled state to the disabled state if the screen recording function is in the enabled state.

The second terminal device disables the screen recording function from the system level by setting SECURE flag:activity.getWindow().addFlags(WindowManager.LayoutParams.FLAG_SECURE), instead of disabling the screen recording function only from the application level. In other words, after SECURE flag is set, the screen recording operation cannot be performed no matter in the video call application interface or other application interfaces.

For example, in an Android system, each interface is an Activity, and the interface is displayed through Window objects, each of which is an instance of Phone Window. When a key operation is executed in the interface, the second terminal device, before dispatching an operation of handling the key to an Application (App), calls back a dispatchUnhandledKey method in PhoneWindowManager, where the dispatchUnhandledKey method is used for executing an operation that is before the key currently handled by the App; and calls an interceptFallback method in the dispatchUnhandledKey method to dispatch the operation of handling the key. A interceptKeyBeforeQueueing method is called in the interceptFallback method to realize the processing of a screen recording key. When the interceptFallback method is called, it is determined whether SECURE flag has been set. When SECURE flag has been set, an operation of dispatching the screen recording key is cancelled. When the SECURE flag has not been set, the operation of dispatching the screen recording key is executed, such that a screen recording operation can be executed subsequently. In this way, the setting of SECURE flag allows for disabling the screen recording function from the system level, to ensure that the second terminal device cannot perform a screen recording operation during the video call, thereby improving the security of the video call.

It should be noted that if the screen recording function is in the enabled state before the first request instruction is received, the second terminal device may automatically adjust the screen recording function to the enabled state after the video call is ended.

When a video call needs to be established between the first terminal device and the second terminal device, a call request needs to be sent between the first terminal device and the second terminal device. The second terminal device receives the first request instruction from the first terminal device through the data channel. Therefore, after the call request is sent, an IMS data channel needs to be established between the first terminal device and the second terminal device to transmit the first request instruction.

FIG. 7 is a flowchart of a communication method applied to a second terminal device serving as a calling party. When the second terminal device is the calling party, the method includes, but not limited to, the following steps before receiving a first request instruction from a first terminal device.

In a step of S501, a first call request instruction is sent to the first terminal device.

In a step of S502, a data channel establishment request instruction is sent to the first terminal device.

In a step of S503, the first terminal device establishes a data channel with the second terminal device when the first terminal device receives the data channel establishment request instruction sent by the second terminal device.

After the data channel is established, the following steps are executed.

In a step of S504, a first request instruction from the first terminal device is received through the data channel.

In a step of S505, configuration information of a screen recording function is adjusted according to the first request instruction.

In a step of S506, an adjustment result is fed back to the first terminal device.

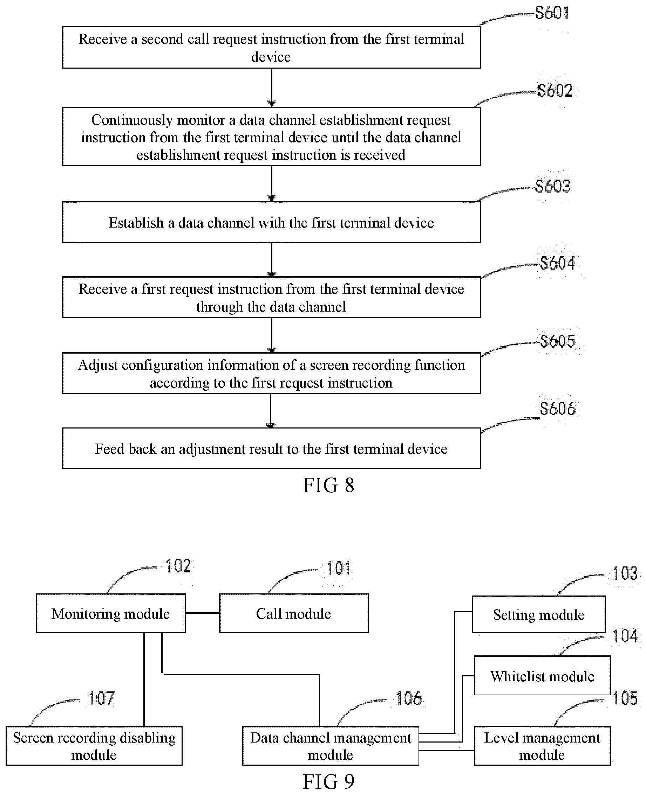

FIG. 8 is a flowchart of a communication method applied to a second terminal device serving as a called party. When the second terminal device is the called party, a first terminal device sends a second call request instruction to the second terminal device. The method includes, but not limited to, the following before receiving a first request instruction from the first terminal device.

In a step of S601, a second call request instruction from the first terminal device is received.

In a step of S602, a data channel establishment request instruction from the first terminal device is continuously monitored until the data channel establishment request instruction is received.

In a step of S603, a data channel is established with the first terminal device.

After the data channel is established, the following steps are executed.

In a step of S604, a first request instruction from the first terminal device is received through the data channel.

In a step of S605, configuration information of a screen recording function is adjusted according to the first request instruction.

In a step of S606, an adjustment result is fed back to the first terminal device.

The adjustment result is fed back to the first terminal device, such that the first terminal device establishes the video call or the audio call with the second terminal device according to the adjustment result. In this way, the screen recording function at the terminal device is limited through configuration, to improve the security of the video call.

FIG. 9 is a block diagram of modules of a terminal device. An embodiment of the present disclosure provides a terminal device. The terminal device may be a first terminal device or a second terminal device. The terminal device includes a call module 101, a monitoring module 102, a setting module 103, a whitelist module 104, a level management module 105, a data channel management module 106, and a screen recording disabling module 107. The call module 101 is configured for establishing, maintaining, and disconnecting a call, where the call includes a video call and an audio call. The monitoring module 102 is configured for monitoring a feedback from a peer end, where the feedback includes a first request instruction, a call request instruction, a data channel establishment request, a response to the first request instruction, etc. The setting module 103 is configured for the terminal device to determine whether to send a first request instruction to the peer end to cause the peer end to disable a screen recording function. The whitelist module 104 is configured for managing a local whitelist. The level management module 105 is configured for managing a corresponding list of communication levels of users. The data channel management module 106 is configured for establishing, maintaining, and disconnecting a data channel. The screen recording disabling module 107 is configured for adjusting configuration information of the screen recording function.

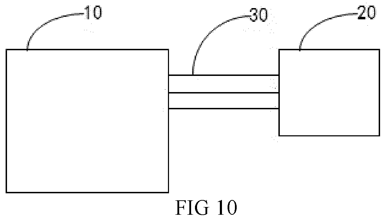

FIG. 10 is a structural diagram of a terminal device. An embodiment of the present disclosure provides a terminal device, including: a memory 20, a processor 10, and a computer program stored in the memory 20 and executable by the processor 10. The computer program, when executed by the processor 10, causes the processor to implement the communication method described above.

The processor 10 and the memory 20 may be connected by a bus 30 or in other ways.

The memory 20, as a non-transitory computer-readable storage medium, may be configured for storing a non-transitory software program and a non-transitory computer-executable program. In addition, the memory 20 may include a high-speed random access memory, and may also include a non-transitory memory, e.g., at least one magnetic disk storage device, flash memory device, or other non-transitory solid-state storage device. In some implementations, the memory 20 includes memories located remotely from the processor 10, and the remote memories may be connected to the processor 10 via a network. Examples of the network include, but not limited to, the Internet, an intranet, a local area network, a mobile communication network, and combinations thereof.

The non-transitory software program and instructions required to implement the communication method of the foregoing embodiments are stored in the memory 20 which, when executed by the processor 10, cause the processor 10 to implement the communication method of the foregoing embodiments, for example, implement the steps S105 to S106 or the steps S404 to S406.

The node embodiments described above are merely examples. The units described as separate components may or may not be physically separated, i.e., they may be located in one place or may be distributed over a plurality of network units. Some or all of the modules may be selected according to actual needs to achieve the objects of the scheme of this embodiment.

In addition, an embodiment of the present disclosure provides a computer-readable storage medium, storing a computer-executable instruction which, when executed by a processor or controller, for example, by a processor in the embodiment described above, may cause the processor to implement the communication method of the foregoing embodiments, for example, implement the steps 5105 to 5106 or the steps S404 to S406.

In an embodiment of the present disclosure, a first terminal device sends a first request instruction to a second terminal device, such that the second terminal device adjusts configuration information of a screen recording function according to the first request instruction, and feeds back an adjustment result to the first terminal device; and establishes a video call or an audio call with the second terminal device according to the adjustment result. The second terminal device receives the first request instruction from the first terminal device, adjusts the configuration information of the screen recording function according to the first request instruction, feeds back the adjustment result to the first terminal device, such that the first terminal device establishes a video call or an audio call with the second terminal device according to the adjustment result. In this way, there is no need to encrypt video content, and the video call processing efficiency is improved. Because there is no need to add a video encryption server in the call network, the costs are reduced. In addition, the screen recording function at the terminal device is limited through configuration, and the screen recording function is disabled during the video call, to improve the security of the video call.

Those having ordinary skills in the art can understand that all or some of the steps in the methods disclosed above and the functional modules/units in the system and the apparatus can be implemented as software, firmware, hardware, and appropriate combinations thereof. Some or all physical components may be implemented as software executed by a processor, such as a central processing unit, a digital signal processor, or a microprocessor, or as hardware, or as an integrated circuit, such as an application-specific integrated circuit. Such software may be distributed on a computer-readable medium, which may include a computer storage medium (or non-transitory medium) and a communication medium (or transitory medium). As is known to those having ordinary skills in the art, the term "computer storage medium" includes volatile and nonvolatile, removable and non-removable media implemented in any method or technology for storage of information (such as computer-readable instructions, data structures, program modules, or other data). The computer storage medium includes, but not limited to, a Random Access Memory (RAM), a Read-Only Memory (ROM), an Electrically Erasable Programmable Read-Only Memory (EEPROM), a flash memory or other memory technology, a Compact Disc Read-Only Memory (CD-ROM), a Digital Versatile Disc (DVD) or other optical storage, a cassette, a magnetic tape, a magnetic disk storage or other magnetic storage device, or any other medium which can be used to store the desired information and can be accessed by a computer. In addition, as is known to those having ordinary skills in the art, the communication medium typically includes computer-readable instructions, data structures, program modules, or other data in a modulated data signal such as a carrier or other transport mechanism, and can include any information delivery medium.

Although some embodiments of the present disclosure have been described above, the present disclosure is not limited to the implementations described above. Those having ordinary skills in the art can make various equivalent modifications or replacements without departing from the scope of the present disclosure. Such equivalent modifications or replacements all fall within the scope defined by the claims of the present disclosure.

## Claims

1. A communication method, applied to a first terminal device in communication connection with a second terminal device, the communication method comprising:
sending a first request instruction to the second terminal device, such that the second terminal device adjusts configuration information of a screen recording function according to the first request instruction, and feeds back an adjustment result to the first terminal device; and
establishing a video call or an audio call with the second terminal device according to the adjustment result.

2. The communication method of claim 1, wherein the adjustment result comprises a first adjustment result and a second adjustment result, the first adjustment result indicates that the screen recording function of the second terminal device has been adjusted to a disabled state, and the second adjustment result indicates that the screen recording function of the second terminal device has been adjusted to an enabled state; and establishing a video call or an audio call with the second terminal device according to the adjustment result comprises:
establishing the video call with the second terminal device in response to the adjustment result being the first adjustment result; or
establishing the audio call with the second terminal device in response to the adjustment result being the second adjustment result.

3. The communication method of claim 1, wherein before sending a first request instruction to the second terminal device, the communication method further comprises:
establishing an Internet Protocol Multimedia Subsystem (IMS) data channel with the second terminal device in response to receiving a first call request instruction from the second terminal device or sending a second call request instruction to the second terminal device, wherein the first call request instruction and the second call request instruction are both used for requesting to establish the video call between the first terminal device and the second terminal device; and
sending the first request instruction to the second terminal device through the IMS data channel.

4. The communication method of claim 1, wherein before sending a first request instruction to the second terminal device, the communication method further comprises:
querying local configuration information, wherein the local configuration information is used for determining whether a first mode is enabled or disabled in the first terminal device, wherein in response to the local configuration information indicating that the first mode is enabled in the first terminal device and the first terminal device being in a video call with the second terminal device, the screen recording function of the second terminal device is in the disabled state; and
directly establishing the video call with the second terminal device in response to the local configuration information being that the first mode is disabled in the first terminal device.

5. The communication method of claim 1, wherein before sending a first request instruction to the second terminal device, the communication method further comprises:
querying a local whitelist which is preset, wherein the local whitelist is used for recording a user who is allowed to perform a screen recording operation during the video call; and
directly establishing the video call with the second terminal device in response to a user corresponding to the second terminal device being comprised in the local whitelist.

6. The communication method of claim 1, wherein before sending a first request instruction to the second terminal device, the communication method further comprises:
querying a communication level of a user corresponding to the second terminal device; and
directly establishing the video call with the second terminal device in response to the communication level of the user corresponding to the second terminal device reaching a preset level threshold.

7. A communication method, applied to a second terminal device in communication connection with a first terminal device, the communication method comprising:
receiving a first request instruction from the first terminal device;
adjusting configuration information of a screen recording function according to the first request instruction; and
feeding back an adjustment result to the first terminal device, such that the first terminal device establishes a video call or an audio call with the second terminal device according to the adjustment result.

8. The communication method of claim 7, wherein before receiving a first request instruction from the first terminal device, the communication method further comprises:
establishing an Internet Protocol Multimedia Subsystem (IMS) data channel with the first terminal device in response to sending a first call request instruction to the first terminal device or receiving a second call request instruction from the first terminal device, wherein the first call request instruction and the second call request instruction are both used for requesting to establish the video call between the first terminal device and the second terminal device; and
receiving the first request instruction from the first terminal device through the IMS data channel.

9. The communication method of claim 7, wherein adjusting configuration information of a screen recording function according to the first request instruction comprises:
selecting to accept or reject to disable the screen recording function according to the first request instruction;
adjusting the screen recording function to a disabled state in response to accepting to disable the screen recording function, and setting the adjustment result to a first adjustment result, wherein the first adjustment result indicates that the screen recording function has been adjusted to the disabled state; and
adjusting the screen recording function to an enabled state in response to rejecting to disable the screen recording function, and setting the adjustment result to a second adjustment result, wherein the second adjustment result indicates that the screen recording function has been adjusted to the enabled state.

10. A terminal device, comprising: a memory, a processor, and a computer program stored in the memory and executable by the processor, wherein the computer program, when executed by the processor, causes the processor to perform the communication method of any of claims 1 to 6, or the communication method of any of claims 7 to 9.

11. A computer-readable storage medium, storing a computer-executable instruction which, when executed by a processor, causes the processor to perform the communication method of any one of claims 1 to 6, or the communication method of any of claims 7 to 9.
